# EUROPEAN PATENT SPECIFICATION

(11) **EP 4 450 860 B1**
(45) Date of publication and mention of the grant of the patent: **08.07.2026**
(21) Application number: 23207042.5
(22) Date of filing: 31.10.2023
(51) Int. Cl.: F16L 55/165

(54) **PIPELINE REPLACEMENT DEVICE AND METHOD FOR USING THE PIPELINE REPLACEMENT DEVICE**
ROHRLEITUNGSERSATZVORRICHTUNG UND VERFAHREN ZUR VERWENDUNG DER ROHRLEITUNGSERSATZVORRICHTUNG
DISPOSITIF DE REMPLACEMENT DE PIPELINE ET PROCÉDÉ D'UTILISATION DU DISPOSITIF DE REMPLACEMENT DE PIPELINE

(30) Priority: 18.04.2023 CN 202310420202
(43) Date of publication of application: 23.10.2024
(73) Proprietor: China Three Gorges Corporation, Wuhan, Hubei 430010 (CN)
(72) Inventor: CHEN, Xiaolong, Wuhan, Hubei, 430010 (CN); WANG, Dianchang, Wuhan, Hubei, 430010 (CN); PENG, Shouhai, Wuhan, Hubei, 430010 (CN); WANG, Wanqiong, Wuhan, Hubei, 430010 (CN); MI, Rongxi, Wuhan, Hubei, 430010 (CN); LI, Yaqing, Wuhan, Hubei, 430010 (CN); ZHANG, Chi, Wuhan, Hubei, 430010 (CN); LI, Weiye, Wuhan, Hubei, 430010 (CN); LI, Jiaying, Wuhan, Hubei, 430010 (CN)
(74) Representative: Grosse, Felix Christopher

(56) References cited:
- EP-B1- 0 411 278
- US-A- 5 207 533
- US-A1- 2015 196 989

## Description

### TECHNICAL FIELD

The present invention relates to the technical field of underground drainage pipeline replacement, in particular relates to a pipeline replacement device and a method for using the pipeline replacement device.

### BACKGROUND

With the development of cities, the service life of drainage pipes is too long, and reinforced concrete drainage pipes commonly have the problem of structural damage, which would easily lead to leakage of sewage in the drainage pipes, thereby causing environmental pollution. In order to prevent this phenomenon from occurring, it is necessary to timely replace the old pipes in the urban drainage system. Currently, there are two main types of methods for replacing old drainage pipes: the excavation type method and the non-excavation type method. Wherein the excavation type method is to excavate the land, expose the pipes, and then replace the old pipes. However, this type of method would have a significant impact on surrounding residents and traffic, and may also cause damage to cables or other pipelines during the excavation process. The non-excavation type method is to respectively arrange an originating well and a receiving well at the starting and ending positions of replacement work, and lower the pipeline replacement device into the originating well. The pipeline replacement device is used to break old pipelines and lay new pipelines at corresponding underground positions, thereby reducing the impact on surrounding residents and traffic.

The existing pipeline replacement devices use pneumatic picks or tooth wheels to forcefully break the pipe wall when breaking old reinforced concrete pipelines, resulting in poor breaking effect, long working time, and loud working noise. And the cutting tools are extremely prone to wear and tear, and thus require regular replacement, which increases working costs.

Pipeline replacement devices are known from the prior art e.g., from EP 0 411 278 B1 or US 5,207,533 A.

### SUMMARY

Therefore, a technical problem to be solved by the present invention is how to overcome the defects of poor breaking effect, long working time, loud working noise, and the need for regular replacement of cutting tools when a reinforced concrete pipeline replacement device in the prior art needs to use a pneumatic pick or a tooth wheel to forcefully break the pipe wall, thereby providing a pipeline replacement device with low working noise, good cutting effect, short working time and no need for regular replacement of a cutting mechanism, and a method for using the pipeline replacement device.

For this purpose, the present invention provides a pipeline replacement device that comprises:
a shell;
a cutting mechanism, comprising a water jet cutting component arranged on a front end of the shell;
a waste transportation mechanism, arranged inside the shell, wherein the waste transportation mechanism is configured to transport cut pipeline blocks from the water jet cutting component to a rear end of the shell;
a jacking mechanism, a driving end of which is able to abut against the rear end of the shell to push the shell to move in a direction away from the jacking mechanism.

According to the invention, the water jet cutting component comprises at least one water jet rotatable nozzle and a plurality of water jet fixed nozzles, wherein the plurality of water jet fixed nozzles are spaced apart in a circumferential direction around the shell, the water jet rotatable nozzle is arranged on one side of the water jet fixed nozzles away from the shell.

Optionally, the cutting mechanism further comprises a first mounting plate, one end of the first mounting plate is connected to an inner wall of the shell, an opposite end of the first mounting plate extends out of the shell and is provided with the water jet cutting component.

Optionally, the waste transportation mechanism comprises a receiving member, a gripping member and a transportation member, the receiving member is arranged above the first mounting plate, and a receiving gap is formed between an upper surface of the receiving member and a second mounting plate fixedly arranged on the inner wall of the shell, and a waste inlet opening is provided at ends of both the receiving member and the second mounting plate near the water jet cutting component, the gripping member is arranged near the rear end of the shell and is fixedly connected to the inner wall of the shell, and the transportation member is arranged at bottom of the shell.

Optionally, the pipeline replacement device further comprises a soil scraping mechanism, which comprises a driving member, a transmission component, and a cutter disk, wherein the driving member is arranged at the bottom of the shell, a driving end of the driving member is connected to a power input end of the transmission component, and a power output end of the transmission component is connected to the cutter disk.

Optionally, the transmission component comprises a first transmission gear and a second transmission gear that are connected to each other in a meshing manner, wherein the first transmission gear is connected to the driving end of the driving member, the second transmission gear is sleeved on the second mounting plate, and the cutter disk is fixedly connected to an end surface of the second transmission gear.

Optionally, the cutter disk is provided with a scraper tooth component, which comprises a plurality of first scraper teeth and a plurality of second scraper teeth spaced apart in a circumferential direction, and the second scraper teeth are arranged near an outer edge of the cutter disk.

Optionally, the pipeline replacement device further comprises a mud water treatment mechanism, which comprises a mud inlet opening, a partition plate, a water inlet pipe, and a mud water discharge pipe, wherein an end surface of the cutter disk is provided with a plurality of mud inlet openings, and the partition plate is sleeved on the second mounting plate, and the partition plate is arranged to be spaced apart from the cutter disk, wherein the cutter disk, the partition plate, the shell and the second mounting plate together enclose a mud water accommodation chamber, and the partition plate is provided with an water inlet opening and a mud water outlet opening, wherein the water inlet opening and the mud water outlet opening are respectively connected to the water inlet pipe and the mud water discharge pipe.

Optionally, the shell comprises a front shell part and a rear shell part that are connected to each other in a plugging manner, one side of the front shell part near the rear shell part and one side of the rear shell part near the front shell part are both provided with an annular plate, wherein an adjustment mechanism for adjusting a forward travelling direction of the shell is arranged between the two annular plates on the front shell part and the rear shell part, and three micro-inertial measurement units are arranged on an inner wall of the front shell part.

A method for using a pipeline replacement device, which is applied to the above-mentioned pipeline replacement device, the method comprises the following steps:
pushing a shell into an area of an old pipeline that needs to be replaced by using a jacking mechanism;
turning on water jet fixed nozzles, cutting the old pipeline along an axial direction by using the water jet fixed nozzles, and at the same time turning on a soil scraping mechanism, scraping soil around the old pipeline by using the soil scraping mechanism, and discharging mud water by using a mud water treatment mechanism;
turning off the water jet fixed nozzles and the soil scraping mechanism after the shell travels forward for a distance, and turning on a water jet rotatable nozzle, and circumferentially cutting the old pipeline by using the water jet rotatable nozzle to form pipeline blocks;
transporting the pipeline blocks from a water jet cutting component to a rear end of the shell by using a waste transportation mechanism;
resetting the jacking mechanism and placing a new pipeline between the jacking mechanism and the shell;
repeating the above-mentioned steps until all old pipelines have been cut and all new pipelines have been laid.

The present invention has the following advantages:
1. The pipeline replacement device provided by the present invention adopts the idea of cutting the underground buried reinforced concrete pipelines into blocks and then transporting the blocks to above the ground for centralized processing. A water jet cutting component is arranged on a front end of the shell, the water jet cutting component cuts the old pipeline by means of high-pressure water, and therefore, preheating is not required during the cutting process, which saves working time, improves working efficiency; and because the water jet cutting component does not come into contact with the old pipeline, no wear and tear of the water jet cutting component would be caused, and regular replacement is not required, thereby saving the working costs. The waste transportation mechanism arranged inside the shell can transport the cut pipeline blocks formed by cutting the old pipeline to a rear end of the shell, making it convenient for subsequent manual transportation and cleaning of the pipeline blocks.
2. In the pipeline replacement device provided by the present invention, the water jet cutting component comprises at least one water jet rotatable nozzle and a plurality of water jet fixed nozzles. When cutting an old pipeline, cutting is performed along the axial direction of the shell by the water jet fixed nozzles, and then, after cutting for a certain length, circular cutting is performed by the water jet rotatable nozzle, so that a section of the old pipeline can be cut into several pipeline blocks, which facilitates the transportation by the waste transportation mechanism. And cutting by high-pressure water is faster and more efficient.
3. In the pipeline replacement device provided by the present invention, the waste transportation mechanism comprises a receiving member, a gripping member and a transportation member, the receiving member is arranged above the first mounting plate, this arrangement can protect the first mounting plate by preventing the pipeline block from falling and hitting the first mounting plate and consequently causing damage to the water jet cutting component. And the pipeline blocks can be transitioned to the bottom of the shell by means of the receiving member, making it easy for the gripping member to grip the pipeline blocks onto the transportation member.
4. In the pipeline replacement device provided by the present invention, the rock-soil mass cut by the cutter disk enters the mud water accommodation chamber from the mud inlet opening, and the water that has been injected into the mud water accommodation chamber through the water inlet pipe is mixed with the rock-soil mass to form mud water, and then the mud water is exported through the mud water discharge pipe. The pressure in the mud water accommodation chamber can be controlled by adjusting the cutting speed, the flow rate of the water inlet pipe and the flow rate of the mud water discharge pipe, thereby effectively maintaining the stability of the tunnel face. The second mounting plate extends for a certain length forward relative to the position of the cutter disk, which prevents the mud water in the mud water accommodation chamber from flowing into the interior of the shell and adversely affecting the working safety, thereby increasing the upper limit of pipeline capacity expansion.
5. In the pipeline replacement device provided by the present invention, the shell comprises a front shell part and a rear shell part that are connected to each other in a plugging manner, micro-inertial measurement units are arranged on an inner wall of the front shell part, one side of the front shell part near the rear shell part and one side of the rear shell part near the front shell part are both provided with an annular plate, wherein an adjustment mechanism for adjusting a forward travelling direction of the shell is arranged between the two annular plates on the front shell part and the rear shell part. The point coordinates provided by the micro-inertial measurement units in real time can be used to construct a three-dimensional spatial model of the front shell part, compare it with a spatial model of the old pipeline, so as to calculate an action of the adjustment mechanism to automatically control the deviation correction orientation by issuing a command, thereby ensuring the accuracy of replacement work.

### BRIEF DESCRIPTION OF THE DRAWINGS

In order to describe the technical solutions in specific embodiments of the present invention or in the prior art more clearly, hereinafter, the drawings needed for describing the specific embodiments or the prior art are briefly introduced. Apparently, the accompanying drawings described below show some embodiments of the present invention, and a person of ordinary skill in the art may still derive other drawings from these accompanying drawings without expenditure of creative efforts.
Figure 1 is a working schematic diagram of the pipeline replacement device of the present invention;
Figure 2 is a schematic diagram of the front shell part in Embodiment 1 of the pipeline replacement device of the present invention;
Figure 3 is a sectional schematic diagram along the line A-A in Figure 2;
Figure 4 is a sectional schematic diagram along the line B-B in Figure 2;
Figure 5 is a sectional schematic diagram along the line C-C in Figure 2;
Figure 6 is a left view of the front shell part in Embodiment 1 of the pipeline replacement device of the present invention;
Figure 7 is a sectional schematic diagram along the line D-D in Figure 6;
Figure 8 is a right view of the front shell part in Embodiment 1 of the pipeline replacement device of the present invention;
Figure 9 is a schematic diagram of the internal structure of the front shell part in Embodiment 1 of the pipeline replacement device of the present invention;
Figure 10 is a left oblique view of the front shell part in Embodiment 1 of the pipeline replacement device of the present invention;
Figure 11 is a left oblique view of the rear shell part in Embodiment 1 of the pipeline replacement device of the present invention;
Figure 12 is a schematic diagram of the mechanical arm in Embodiment 1 of the pipeline replacement device of the present invention;
Figure 13 is a schematic diagram of the new pipeline in Embodiment 1;
Figure 14 is a schematic diagram of the transportation mechanism in Embodiment 1;
Figure 15 is a schematic diagram of the front shell part in Embodiment 2;
Figure 16 is a schematic diagram of the transportation mechanism in Embodiment 2.

### DETAILED DESCRIPTION

Hereinafter, the technical solutions of the present invention are clearly and completely described with reference to the accompanying drawings. Apparently, the described embodiments are merely some, rather than all, of the embodiments of the present invention.

In the description of the present invention, it needs to be understood that orientational or locational relationships indicated by terms such as "center", "up", "down", "left", "right", "vertical", "horizontal", "inside", and "outside" are based on orientational or locational relationships shown in the accompanying drawings, and are only used to facilitate description of the present invention and simplify description, but are not used to indicate or imply that the apparatuses or elements referred to must have a specific orientation or must be constructed and operated in a specific orientation, and therefore, cannot be understood as a limitation to the present invention. In addition, the terms such as "first", "second", and "third" are used only for description, but are not intended to indicate or imply relative importance.

In the description of the present invention, it needs to be noted that, unless expressly specified and defined otherwise, the terms such as "mounted", "connected", and "connection" should be understood in a broad sense, for example, it may be fixedly connected, detachably connected or integrally connected; it may be mechanically connected or electrically connected; it may be connected directly or connected indirectly through an intermediate medium, or two elements may be communicated internally. For a person of ordinary skill in the art, specific meanings of the above terms in the present invention should be understood according to specific circumstances.

In addition, the technical features involved in different embodiments of the present invention described below can be combined with each other as long as there is no conflict between them.

### Embodiment 1

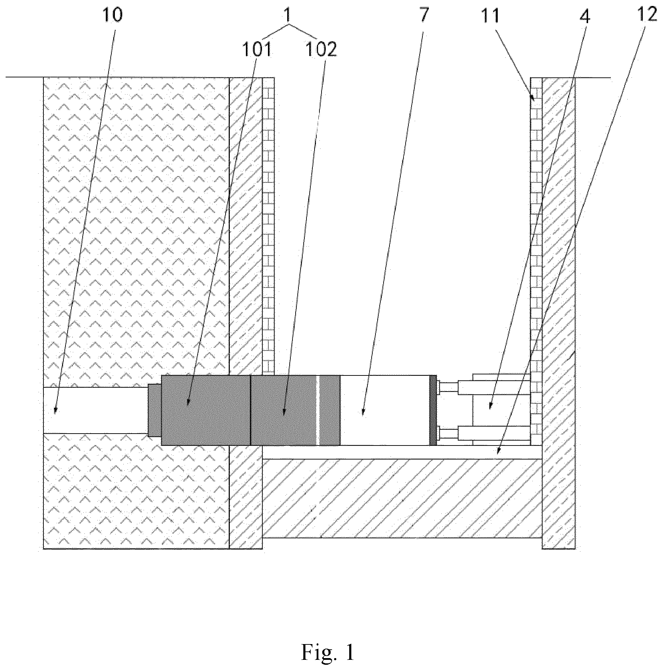

A preferred embodiment of the pipeline replacement device of the present invention is shown in Figure 1, this pipeline replacement device can be applied to cut old underground concrete drainage pipelines and replace them with new drainage pipelines. Moreover, this pipeline replacement device does not require preheating during cutting and can directly cut old pipelines, and therefore has shorter working time, high efficiency, and does not require regular replacement of its cutting mechanism.

As shown in Figure 1, the above-mentioned pipeline replacement device comprises: a shell 1, a cutting mechanism, a waste transportation mechanism and a jacking mechanism 4. Wherein, the shell 1 is cylindrical, and comprises a front shell part 101 and a rear shell part 102, which are connected to each other in a plugging manner and sealed with rubber sealing rings. Moreover, as shown in Figure 1, the front end of the shell 1 is on the left side, and the rear end of the shell 1 is on the right side. One side of the front shell part 101 near the rear shell part 102 and one side of the rear shell part 102 near the front shell part 101 are both provided with an annular plate 103, and an adjustment mechanism for adjusting a forward travelling direction of the shell 1 is arranged on the annular plate 103 of the front shell part 101. In the present embodiment, the adjustment mechanism is a plurality of deviation correction jacks 104 arranged in a circumferential direction. In addition, three micro-inertial measurement units 105 are arranged on an inner wall of the front shell part 101, and the three micro-inertial measurement units 105 are located in the same vertical cross-section. The position of the shell 1 can be measured by the micro-inertial measurement units 105, so as to calculate a deviation from the position of the old pipeline 10, which facilitates controlling the deviation correction jacks 104 to correct the deviation.

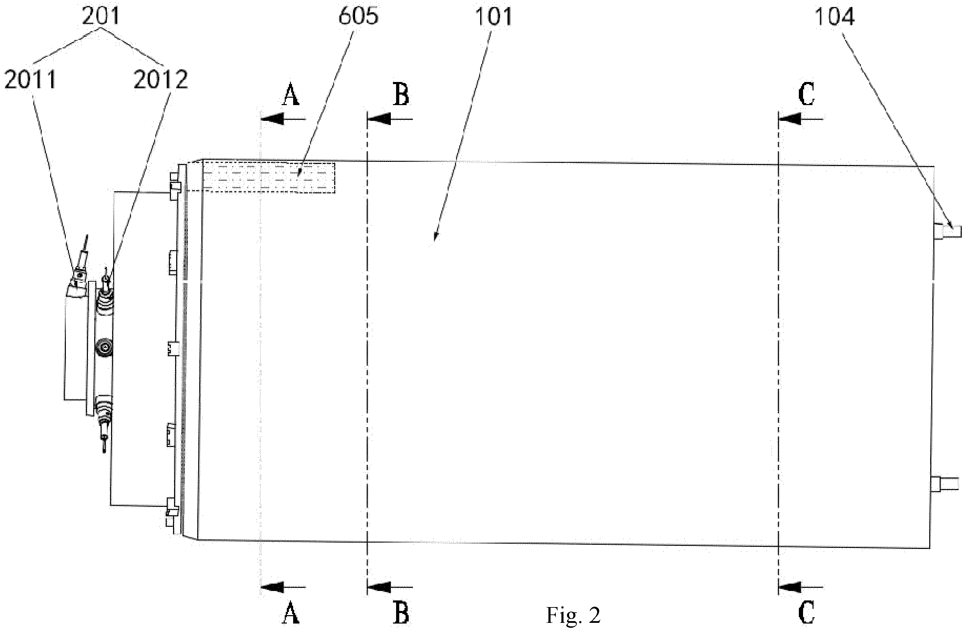

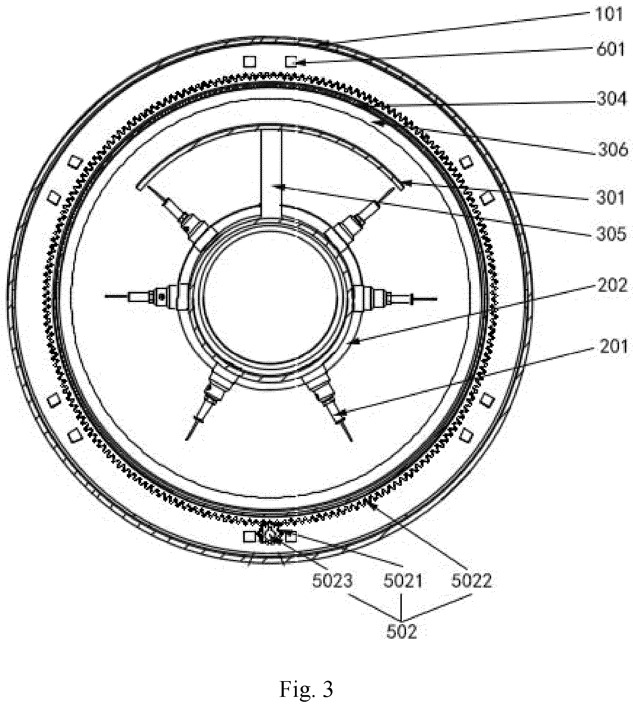

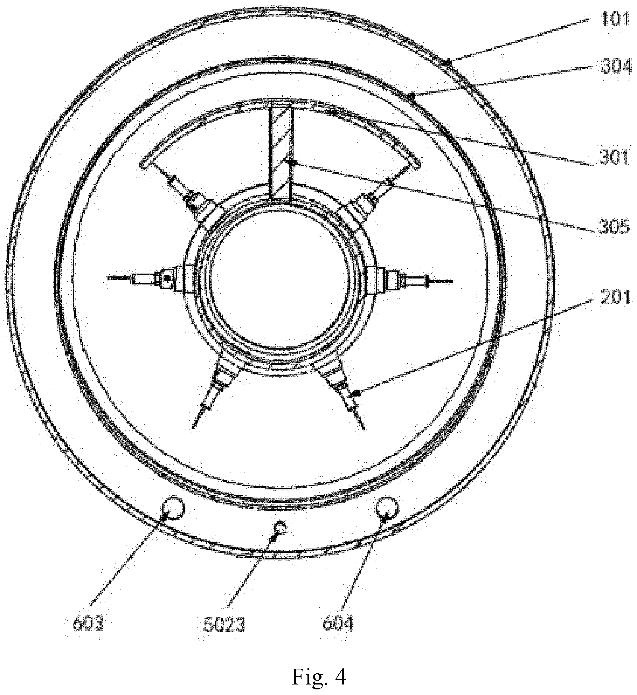

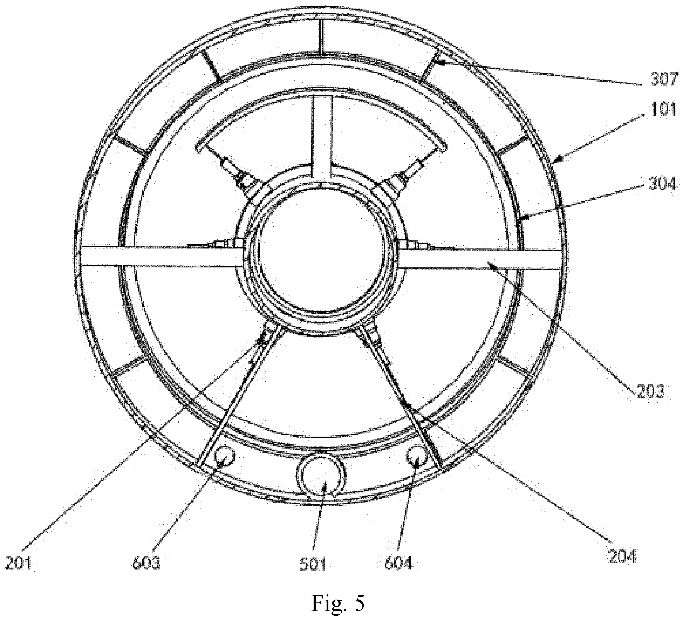

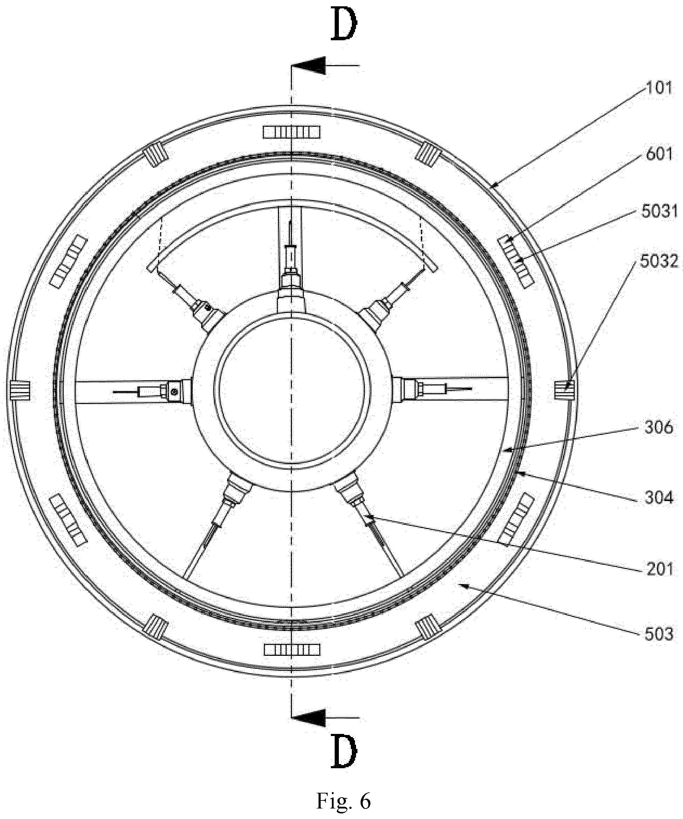

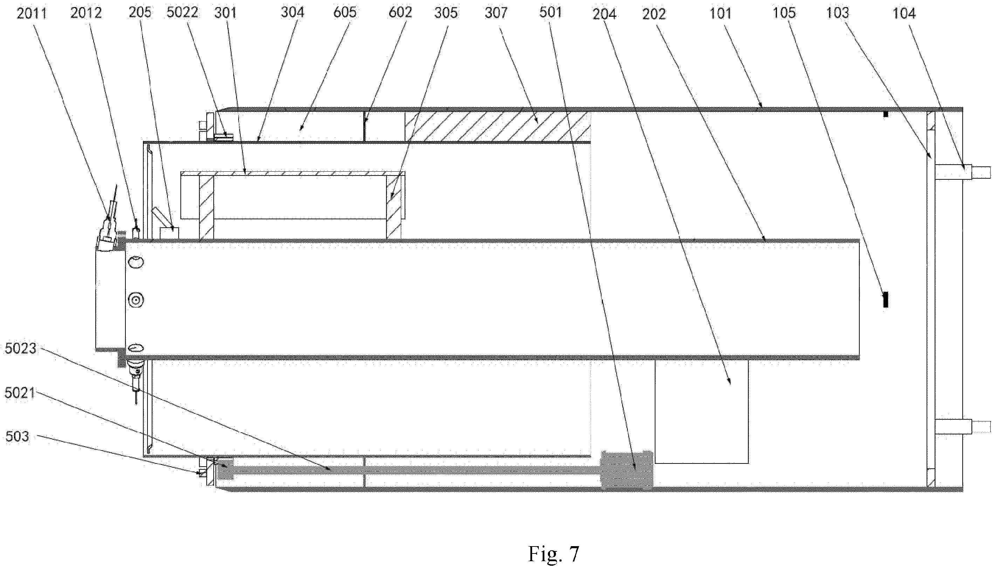

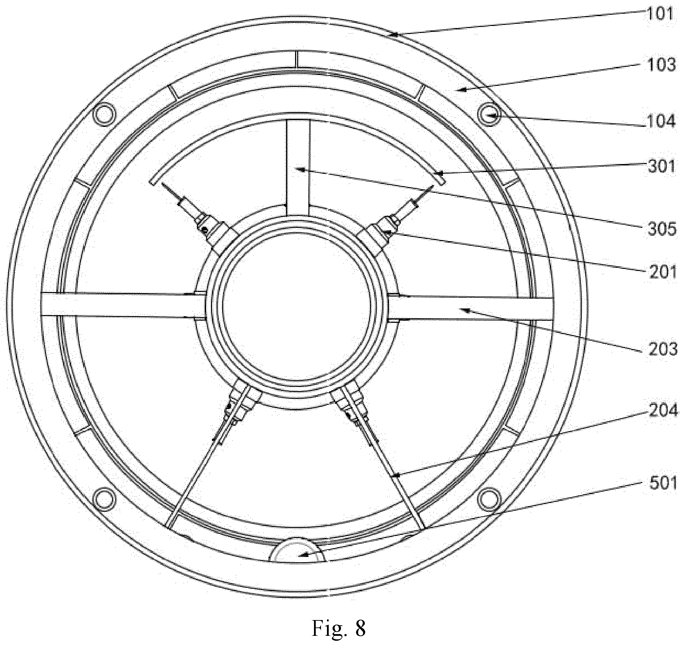

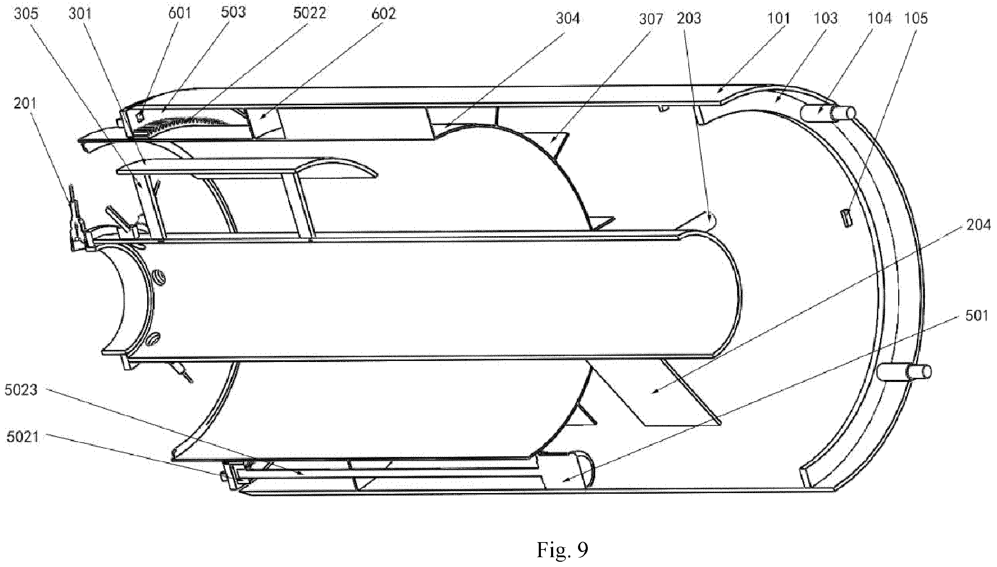

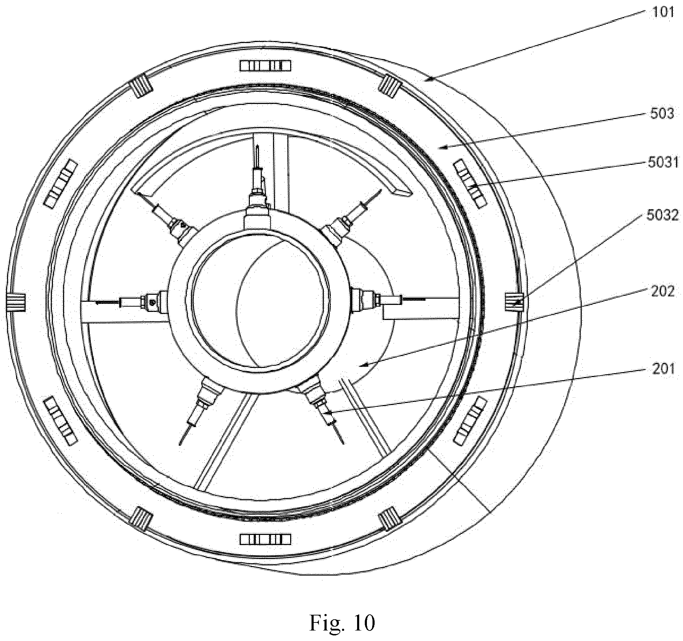

As shown in Figures 2-10, the cutting mechanism comprises a water jet cutting component 201 arranged on a front end of the shell 1, the water jet cutting component 201 comprises at least one water jet rotatable nozzle 2011 and a plurality of water jet fixed nozzles 2012, wherein the plurality of water jet fixed nozzles 2012 are spaced apart in a circumferential direction around the shell 1, the water jet rotatable nozzle 2011 is arranged on one side of the water jet fixed nozzles 2012 away from the shell 1. Specifically, in the present embodiment, the water jet cutting component 201 comprises one water jet rotatable nozzle 2011 and six water jet fixed nozzles 2012, the water-jetting direction of the water jet fixed nozzle 2012 is along the radial direction of the shell 1, and the water-jetting direction of the water jet rotatable nozzle 2011 tilts towards the side of the water jet fixed nozzles 2012.

Optionally, the cutting mechanism further comprises a first mounting plate 202, one end of the first mounting plate 202 is connected to an inner wall of the shell 1, an opposite end of the first mounting plate 202 extends out of the shell 1 and is provided with the water jet cutting component 201.Specifically, in the present embodiment, the first mounting plate 202 is cylindrical and arranged coaxially with the shell 1. One end of the first mounting plate 202 is fixedly connected to the inner wall of the shell 1 through position-limiting rods 203 and position-limiting rib plates 204, and an opposite end of the first mounting plate 202 extends out of the shell 1. Six mounting holes are arranged on the end of the first mounting plate 202 which extends out of the shell 1 and are used to mount the six water jet fixed nozzles 2012. And a rotatable rotating seat is also arranged at this end for mounting the water jet rotatable nozzle 2011. The rotating seat drives the water jet rotatable nozzle 2011 to rotate, so that the water jet rotatable nozzle 2011 can perform circular cutting. In addition, this end of the first mounting plate 202 is also provided with a high-definition camera 205, which can monitor the working process and transmit real-time working images.

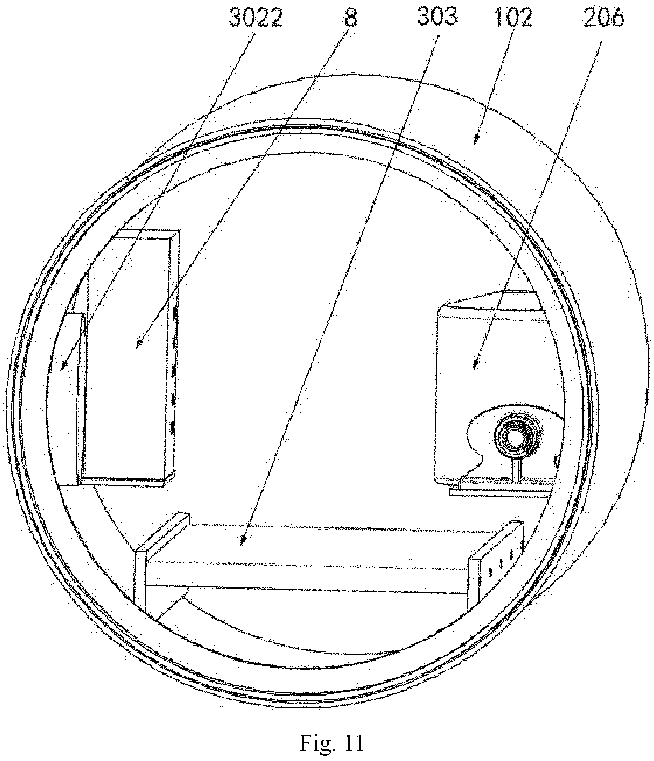

The cutting mechanism also comprises an auxiliary component 206, which is located in the rear shell part 102. High-pressure water can be provided from the auxiliary component 206 to the water jet rotatable nozzle 2011 and the water jet fixed nozzles 2012, and the old pipeline 10 is cut by using the high-pressure water. Specifically, the auxiliary component 206 comprises a water storage tank, an automatic sand control device, and a high-pressure pump. As shown in Figure 11, the automatic sand control device and the high-pressure pump are powered by a distribution box 8 located in the rear shell part 102, and a conduit connecting the automatic sand control device and the high-pressure pump to the water jet cutting component 201 can be situated in the hollow cavity of the first mounting plate 202.

The waste transportation mechanism is arranged inside the shell 1, wherein the waste transportation mechanism is configured to transport cut pipeline blocks from the water jet cutting component 201 to a rear end of the shell 1. Furthermore, the waste transportation mechanism comprises a receiving member 301, a gripping member and a transportation member 303, the receiving member 301 is arranged above the first mounting plate 202, and a receiving gap is formed between an upper surface of the receiving member 301 and a second mounting plate 304 fixedly arranged on the inner wall of the shell 1, and a waste inlet opening is provided at ends of both the receiving member 301 and the second mounting plate 304 near the water jet cutting component 201. Specifically, in the present embodiment, the receiving member 301 is an arc-shaped plate, arranged to shield above the first mounting plate 202 and fixedly connected to the first mounting plate 202 through support rods 305. The second mounting plate 304 is cylindrical, wherein a sealing brush 306 is arranged along the circumferential direction on the inner wall of the front end of the second mounting plate 304. The sealing brush 306 can form a good seal with the outer wall of the old pipeline 10. The second mounting plate 304 is arranged coaxially with the shell 1, and is fixedly connected to the front shell part 101 through a plurality of connection plates 307 distributed circumferentially around the inner wall of the shell 1. The diameter of the second mounting plate 304 is smaller than the diameter of the shell 1 and larger than the diameter of the receiving member 301, and the front end of the second mounting plate 304 extends out of the front end of the shell 1. When the old pipeline 10 is surrounded by hard strata such as hard plastic clay, the water jet cutting component 201 is located at the front end of the second mounting plate 304, that is, the cutting point is located outside the second mounting plate 304, which can cut the hard soil body and facilitate the forward movement of the shell 1. The old pipeline 10 enters the receiving gap between the receiving member 301 and the second mounting plate 304 from the waste inlet opening. After the old pipeline 10 is cut into pipeline blocks by the water jet cutting component 201, the pipeline blocks are scattered and fall onto the bottom of the second mounting plate 304 under the flow guide function of the receiving member 301.

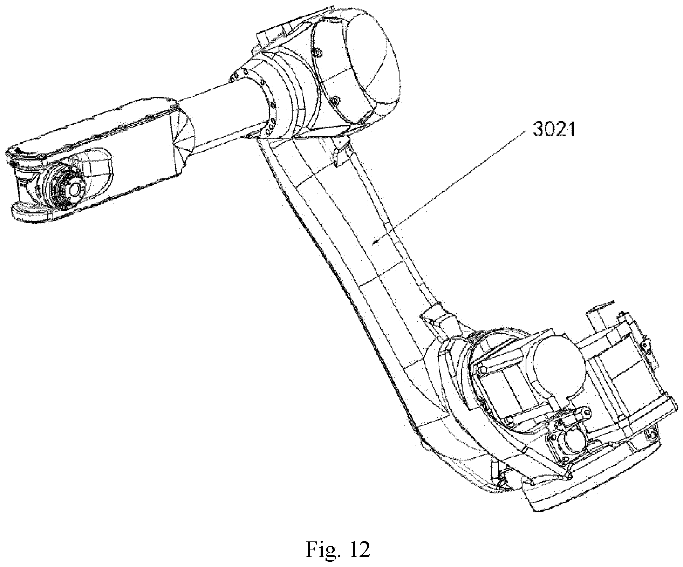

The gripping member is arranged near the rear end of the shell 1 and is fixedly connected to the inner wall of the shell 1, and the transportation member 303 is arranged at bottom of the shell 1. Specifically, as shown in Figures 11 and 12, the gripping member comprises a mechanical arm 3021 with multi degrees of freedom and a mechanical arm mounting seat 3022. The mechanical arm mounting seat 3022 is fixedly arranged on the inner wall of the rear shell part 102, the mechanical arm 3021 is connected to the mechanical arm mounting seat 3022, and the transportation member 303 is a conveyor belt fixedly mounted at the bottom of the rear shell part 102, and there is space under the bottom of the conveyor belt for conduits to pass through. The pipeline blocks on the bottom of the second mounting plate 304 is gripped onto the conveyor belt by the mechanical arm 3021 and transported to the rear end of the shell 1 by the conveyor belt.

A driving end of the jacking mechanism 4 is able to abut against the rear end of the shell 1 to push the shell 1 to move in a direction away from the jacking mechanism 4. The jacking mechanism 4 mainly provides a driving force for the forward movement of the shell 1 as well as the laying of the new pipeline 7. In the present embodiment, the jacking mechanism 4 comprises a plurality of hydraulic cylinders.

The pipeline replacement device further comprises a soil scraping mechanism, which comprises a driving member 501, a transmission component 502, and a cutter disk 503, wherein the driving member 501 is arranged at the bottom of the shell 1, a driving end of the driving member 501 is connected to a power input end of the transmission component 502, and a power output end of the transmission component 502 is connected to the cutter disk 503. Specifically, in the present embodiment, the driving member 501 is an electric motor, which is arranged at the bottom of the front shell part 101. The cutter disk 503 can be driven to rotate and scrape the soil under the drive of the electric motor.

Optionally, the transmission component 502 comprises a first transmission gear 5021 and a second transmission gear 5022 that are connected to each other in a meshing manner, wherein the first transmission gear 5021 is connected to the driving end of the driving member 501, the second transmission gear 5022 is sleeved on the second mounting plate 304, and the cutter disk 503 is fixedly connected to an end surface of the second transmission gear 5022. Specifically, in the present embodiment, the first transmission gear 5021 is connected to the driving member 501 through a transmission shaft 5023, which is arranged at the bottom of the front shell part 101 and under the second mounting plate 304. The first transmission gear 5021 is a small gear, while the second transmission gear 5022 is a large gear. The cutter disk 503 is located at the front end of the shell 1, and a small clearance exists between the cutter disk 503 and the edge of the shell 1. The cutter disk 503 is connected to the second mounting plate 304 through a roller bearing arranged on the second mounting plate 304, and the roller bearing can restrict any axial displacement of the cutter disk 503 and meanwhile enable the cutter disk 503 to rotate circumferentially around the second mounting plate 304. The outer diameter of the cutter disk 503 is equal to the outer diameter of the shell 1. The driving member 501 drives the transmission shaft 5023 and the first transmission gear 5021 to rotate, so as to drive the second transmission gear 5022 that meshes with the first transmission gear 5021 to rotate, thereby driving the cutter disk 503 connected to the end surface of the second transmission gear 5022 to rotate.

Optionally, the cutter disk 503 is provided with a scraper tooth component, which comprises a plurality of first scraper teeth 5031 and a plurality of second scraper teeth 5032 spaced apart in a circumferential direction. The first scraper teeth 5031 are arranged on the end surface of the cutter disk 503 and the second scraper teeth 5032 are arranged near an outer edge of the cutter disk 503, so that the cross-sectional area of scraping is slightly larger than the outer edge of the shell 1. When the cutter disk 503 rotates, the soil can be scraped by the first scraper teeth 5031 and the plurality of second scraper teeth 5032.

The pipeline replacement device further comprises a mud water treatment mechanism, which comprises a mud inlet opening 601, a partition plate 602, a water inlet pipe 603, and a mud water discharge pipe 604, wherein an end surface of the cutter disk 503 is provided with a plurality of mud inlet openings 601, and the partition plate 602 is sleeved on the second mounting plate 304, and the partition plate 602 is arranged to be spaced apart from the cutter disk 503, wherein the cutter disk 503, the partition plate 602, the shell 1 and the second mounting plate 304 together enclose a mud water accommodation chamber 605, and the partition plate 602 is provided with an water inlet opening and a mud water outlet opening, wherein the water inlet opening is connected to the water inlet pipe 603 and the mud water outlet opening is connected to the mud water discharge pipe 604. Specifically, one mud inlet opening 601 is provided on both sides of each first scraper tooth 5031 on the cutter disk 503 respectively, and the mud inlet openings 601 are located on the outer side of the second transmission gear 5022. The water inlet opening and the mud water outlet opening are arranged at the bottom part of the partition plate 602, and the water inlet opening 603 and the mud water outlet opening 604 are also arranged at the bottom of the front shell part 101.

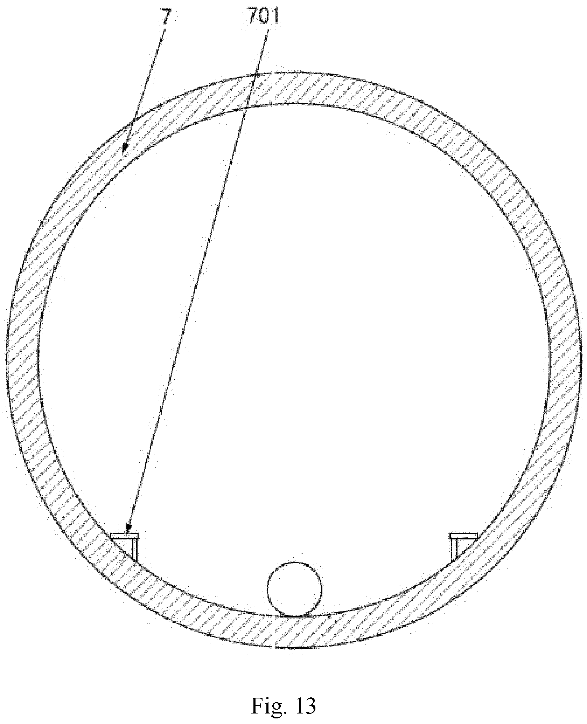

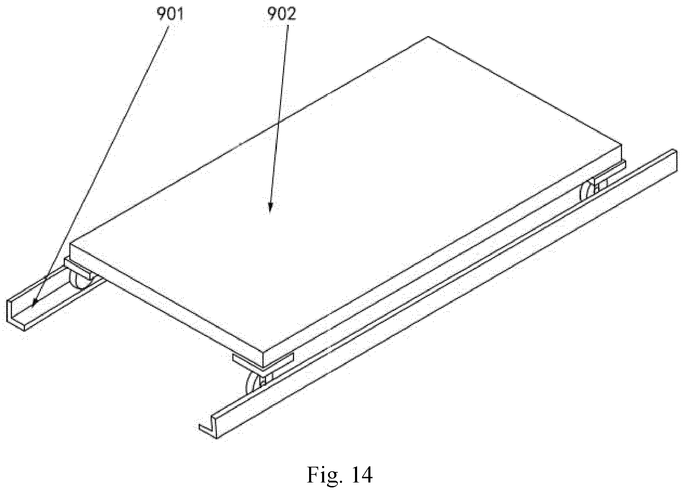

The outer diameter of the new pipeline 7 is slightly smaller than the outer diameter of the shell 1. As shown in Figure 13. A mounting seat 701 is provided on both sides of the bottom of the inner wall of the new pipeline 7, and a carrying mechanism can be placed on the mounting seats 701. In the present embodiment, as shown in Figure 14, the carrying mechanism comprises a trolley track 901 and a transportation trolley 902. The trolley track 901 is arranged on the mounting seats 701, and the transportation trolley 902 can move on the trolley track 901. The pipeline blocks can be transported to a position that is convenient for manual cleaning, by using the carrying mechanism to cooperate with the transportation member 303 in the rear shell part 102.

The present embodiment further provides a method for using a pipeline replacement device, which is applied to the foregoing pipeline replacement device. Since the pipeline replacement device used has the same structure as the pipeline replacement device in the foregoing description of embodiment, it will not be repeatedly described.

The method for using the pipeline replacement device comprises the following steps:
(1) Pushing a shell 1 into an area of an old pipeline 10 that needs to be replaced by using a jacking mechanism 4;
   Firstly, it is necessary to determine the area of the old pipeline 10 that needs to be replaced, and by using 3D laser scanning to detect the internal status of the original pipeline and acquiring the coordinates of the inner wall of the pipeline, a 3D spatial model of the original pipeline is established. Afterwards, constructing an originating working well 11 and a receiving working well at the starting and ending points of the working area, wherein the working wells can adopt a steel caisson structure. According to the route of the old pipeline 10, laying a track 12 and lowering the pipeline replacement device into the originating working well 11. Mounting the jacking mechanism 4, and pushing the shell 1 into the area of the old pipeline 10 by using the jacking mechanism 4.
(2) Turning on water jet fixed nozzles 2012, cutting the old pipeline 10 along an axial direction by using the water jet fixed nozzles 2012, and at the same time turning on a soil scraping mechanism, scraping soil around the old pipeline 10 by using the soil scraping mechanism, and discharging mud water by using a mud water treatment mechanism;
   As the jacking mechanism 4 pushes the shell 1 forward, the water jet fixed nozzles 2012 are synchronously turned on. The water pump transports the water in the water storage tank to the water jet fixed nozzles 2012, and the water jet fixed nozzles 2012 jet high-pressure water along the axial direction of the old pipeline 10 for cutting. At the same time, the driving member 501 drives the cutter disk 503 to rotate, the soil body around the old pipeline 10 is scraped by the first scraper teeth 5031 and the second scraper teeth 5032 on the cutter disk 503. The scraped soil enters the mud water accommodation chamber 605 through the mud inlet opening 601 on the cutter disk 503, and is mixed with the water that has been discharged into the mud water accommodation chamber 605 through the water inlet pipe 603 to form mud water, and the mud water is guided away through the mud water discharge pipe 604. The mud water pressure in the mud water accommodation chamber 605 can be controlled by adjusting the cutting speed as well as the flow rate of the water inlet pipe 603 and the flow rate 604 of the mud water discharge pipe, thereby maintaining the stability of the soil body on the tunnel face.
(3) Turning off the water jet fixed nozzles 2012 and the soil scraping mechanism after the shell 1 travels forward for a distance, and turning on a water jet rotatable nozzle 2011, and circumferentially cutting the old pipeline 10 by using the water jet rotatable nozzle 2011 to form pipeline blocks;
   After the jacking mechanism 4 pushes the shell 1 forward for a certain distance, the water jet fixed nozzles 2012 stop jetting water, and the cutter disk 503 stops rotating. At this time, the water jet rotatable nozzle 2011 is turned on, the old pipeline 10 is cut in a circular direction by the water jet rotatable nozzle 2011. A segment of the old pipeline 10 at the front is cut into a plurality of pipeline blocks.
(4) Transporting the pipeline blocks from a water jet cutting component 201 to an rear end of the shell 1 by using a waste transportation mechanism;
   The pipeline blocks at the top fall onto the receiving member 301 by their own gravity, and then fall onto the bottom of the second mounting plate 304. The remaining blocks are on the lateral sides or slide to the bottom of the second mounting plate 304 due to gravity, and all the pipeline blocks are then gripped onto the transportation member 303 by the gripping member, and are transported to the rear end of the shell 1 by the transportation member 303.
(5) Resetting the jacking mechanism 4 and placing a new pipeline 7 between the jacking mechanism 4 and the shell 1;
   The new pipeline 7 is lowered from the originating working well 11, and after the jacking mechanism 4 is reset, the new pipeline 7 is placed between the jacking mechanism 4 and the rear end of the shell 1. The waste scraps transported by the transportation member 303 is transferred to the carrying mechanism inside the new pipeline 7, and is then carried to the originating entrance hole and lifted out of the originating working well 11.
(6) Repeating the above-mentioned steps until all old pipelines 10 have been cut and all new pipelines 7 have been laid, and finally, the pipeline blocks that have been lifted out undergo centralized processing.

The jacking mechanism 4 is turned on again to push the shell 1 and the new pipeline 7 forward. The above-mentioned steps are repeated, another segment of old pipeline 10 is cut and another segment of new pipeline 7 is laid, until all the old pipelines 10 have been cut and all the new pipelines 7 have been laid. Finally, the pipeline replacement device is disassembled and removed from the receiving work well.

In addition, during the jacking process, the point coordinates of the three micro-inertial measurement units 105 on the inner wall of the front shell part 101 are acquired in real time, and a 3D modeling software is used to build a 3D spatial model of the shell 1, compare it with a spatial model of the old pipeline 10, so as to calculate a deviation correction action, and the deviation correction jacks 104 is automatically controlled by issuing a command. And the working image is constantly monitored by the high-definition camera 205, for controlling the working status of various components in time.

Treatment is performed after the jacking is completed. The front and rear pipeline segments are connected to the replacement pipeline segments; the working wells are disassembled, the soil body is backfilled in a synchronous manner, and a new maintenance well is built.

In other embodiments, the number of water jet rotatable nozzle(s) 2011 may also be two, three, etc., and the number of water jet fixed nozzles 2012 may also be four, eight, etc.

### Embodiment 2

The difference between the present embodiment and Embodiment 1 lies in that the positions of the water jet cutting component 201 and the second mounting plate 304, as well as the carrying mechanism arranged in the new pipeline 7, are different. The other structures are the same and will not be repeatedly described.

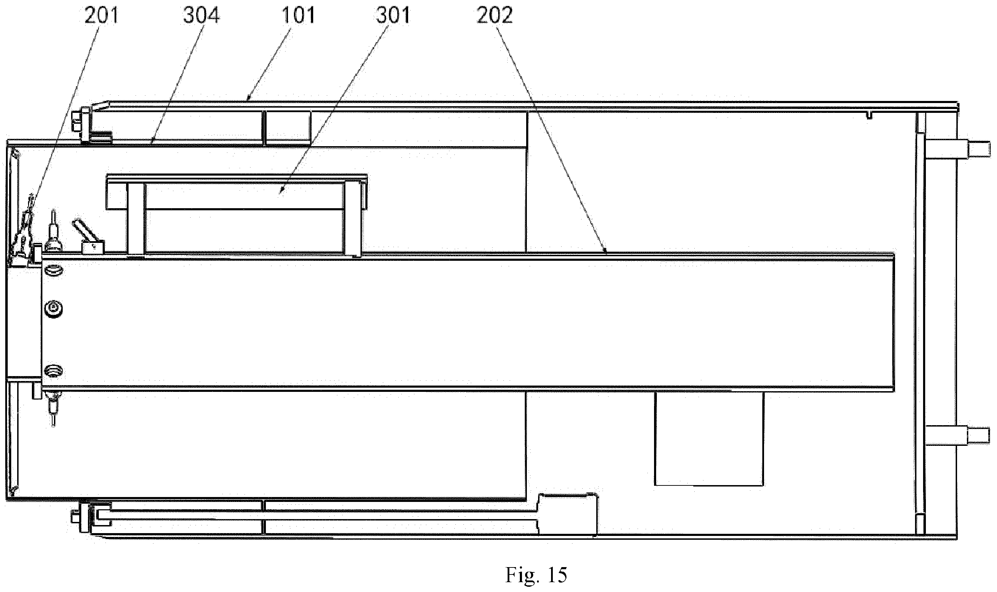

When the old pipeline 10 is surrounded by soft strata such as silt, sand, muddy soil, or soft plastic clay, as shown in Figure 15, the water jet cutting component 201 is located inside the second mounting plate 304 so as to prevent high-pressure water from disturbing the surrounding strata during cutting.

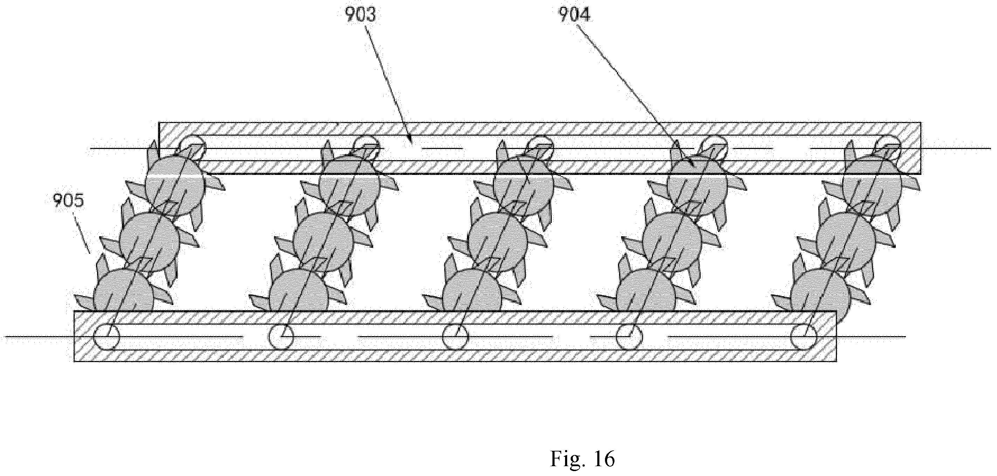

As shown in Figure 16, the carrying mechanism in the new pipeline 7 comprises: slot seats 903, connection rods 904, and transportation wheels 905. The two slot seats 903 are respectively placed on the two mounting seats 701, and a plurality of connection rods 904 are arranged between the two slot seats 903. A plurality of transportation wheels 905 are mounted on each connection rod 904.

Apparently, the foregoing embodiments are merely examples for clear description, rather than a limitation to the implementation ways. For a person of ordinary skill in the art, other changes or variations in different forms may also be made based on the foregoing description. It is unnecessary and impossible to exhaustively list all implementation ways herein.

### REFERENCE SIGNS

1. Shell; 101. Front shell part; 102. Rear shell part; 103. Annular plate; 104. Deviation correction jack; 105. Micro-inertial measurement unit;
201. Water jet cutting component; 2011. Water jet rotatable nozzle; 2012. Water jet fixed nozzle; 202. First mounting plate; 203. Position-limiting rod; 204. Position-limiting rib plate, 205. High-definition camera, 206. Auxiliary component;
301. Receiving member; 3021. Mechanical arm, 3022. Mechanical arm mounting seat, 303. Transportation member; 304. Second mounting plate; 305. Support rod; 306. Sealing brush, 307. Connection plate;
4. Jacking mechanism;
501. Driving member; 502. Transmission component; 5021. First transmission gear; 5022. Second transmission gear; 5023. Transmission shaft, 503. Cutter disk; 5031. First scraper tooth; 5032. Second scraper tooth;
601. Mud inlet opening; 602. Partition plate; 603. Water inlet pipe; 604. Mud water discharge pipe;
605. Mud water accommodation chamber;
7. New pipeline, 701. Installation seat;
8. Distribution box;
901. Trolley track; 902. Transportation trolley; 903. Slot seat; 904. Connection rod; 905. Transportation wheel;
10. Old pipeline;
11. Originating working well;
12. Track.

## Claims

1. A pipeline replacement device, comprising:
a shell (1);
a cutting mechanism, comprising a water jet cutting component (201) arranged on a front end of the shell (1);
a waste transportation mechanism, arranged inside the shell (1), wherein the waste transportation mechanism is configured to transport cut pipeline blocks from the water jet cutting component (201) to a rear end of the shell (1);
a jacking mechanism (4), a driving end of which is able to abut against the rear end of the shell (1) to push the shell (1) to move in a direction away from the jacking mechanism (4),
wherein the water jet cutting component (201) comprises at least one water jet rotatable nozzle (2011) and a plurality of water jet fixed nozzles (2012), wherein the plurality of water jet fixed nozzles (2012) are spaced apart in a circumferential direction around the shell (1), the water jet rotatable nozzle (2011) is arranged on one side of the water jet fixed nozzles (2012) away from the shell (1).

2. The pipeline replacement device according to claim 1, **characterized in that** the cutting mechanism further comprises a first mounting plate (202), one end of the first mounting plate (202) is connected to an inner wall of the shell (1), an opposite end of the first mounting plate (202) extends out of the shell (1) and is provided with the water jet cutting component (201).

3. The pipeline replacement device according to claim 2, **characterized in that** the waste transportation mechanism comprises a receiving member (301), a gripping member and a transportation member (303), the receiving member (301) is arranged above the first mounting plate (202), and a receiving gap is formed between an upper surface of the receiving member (301) and a second mounting plate (304) fixedly arranged on the inner wall of the shell (1), and a waste inlet opening is provided at ends of both the receiving member (301) and the second mounting plate (304) near the water jet cutting component (201), the gripping member is arranged near the rear end of the shell (1) and is fixedly connected to the inner wall of the shell (1), and the transportation member (303) is arranged at bottom of the shell (1).

4. The pipeline replacement device according to claim 3, **characterized by** further comprising: a soil scraping mechanism, which comprises a driving member (501), a transmission component (502), and a cutter disk (503), wherein the driving member (501) is arranged at the bottom of the shell (1), a driving end of the driving member (501) is connected to a power input end of the transmission component (502), and a power output end of the transmission component (502) is connected to the cutter disk (503).

5. The pipeline replacement device according to claim 4, **characterized in that** the transmission component (502) comprises a first transmission gear (5021) and a second transmission gear (5022) that are connected to each other in a meshing manner, wherein the first transmission gear (5021) is connected to the driving end of the driving member (501), the second transmission gear (5022) is sleeved on the second mounting plate (304), and the cutter disk (503) is fixedly connected to an end surface of the second transmission gear (5022).

6. The pipeline replacement device according to claim 4, **characterized in that** the cutter disk (503) is provided with a scraper tooth component, which comprises a plurality of first scraper teeth (5031) and a plurality of second scraper teeth (5032) spaced apart in a circumferential direction, and the second scraper teeth (5032) are arranged near an outer edge of the cutter disk (503).

7. The pipeline replacement device according to claim 4, **characterized by** further comprising: a mud water treatment mechanism, which comprises a mud inlet opening (601), a partition plate (602), a water inlet pipe (603), and a mud water discharge pipe (604), wherein an end surface of the cutter disk (503) is provided with a plurality of mud inlet openings (601), and the partition plate (602) is sleeved on the second mounting plate (304), and the partition plate (602) is arranged to be spaced apart from the cutter disk (503), wherein the cutter disk (503), the partition plate (602), the shell (1) and the second mounting plate (304) together enclose a mud water accommodation chamber (605), and the partition plate (602) is provided with an water inlet opening and a mud water outlet opening, wherein the water inlet opening and the mud water outlet opening are respectively connected to the water inlet pipe (603) and the mud water discharge pipe (604).

8. The pipeline replacement device according to any one of the claims 1-7, **characterized in that** the shell (1) comprises a front shell part (101) and a rear shell part (102) that are connected to each other in a plugging manner, one side of the front shell part (101) near the rear shell part (102) and one side of the rear shell part (102) near the front shell part (101) are both provided with an annular plate (103), wherein an adjustment mechanism for adjusting a forward travelling direction of the shell (1) is arranged between the two annular plates (103) on the front shell part (101) and the rear shell part (102), and three micro-inertial measurement units (105) are arranged on an inner wall of the front shell part (101)

9. A method for using a pipeline replacement device according to any one of claims 1-8, comprising the following steps:
pushing a shell (1) into an area of an old pipeline (10) that needs to be replaced by using a jacking mechanism (4);
turning on water jet fixed nozzles (2012), cutting the old pipeline (10) along an axial direction by using the water jet fixed nozzles (2012), and at the same time turning on a soil scraping mechanism, scraping soil around the old pipeline (10) by using the soil scraping mechanism, and discharging mud water by using a mud water treatment mechanism;
turning off the water jet fixed nozzles (2012) and the soil scraping mechanism after the shell (1) travels forward for a distance, and turning on a water jet rotatable nozzle (2011), and circumferentially cutting the old pipeline (10) by using the water jet rotatable nozzle (2011) to form pipeline blocks;
transporting the pipeline blocks from a water jet cutting component (201) to a rear end of the shell (1) by using a waste transportation mechanism;
resetting the jacking mechanism (4) and placing a new pipeline (7) between the jacking mechanism (4) and the shell (1);
repeating the above-mentioned steps until all old pipelines (10) have been cut and all new pipelines (7) have been laid.

## Patentansprüche

1. Rohrleitungsersatzvorrichtung, umfassend:
ein Gehäuse (1);
einen Schneidmechanismus, umfassend eine an einem vorderen Ende des Gehäuses (1) angeordnete Wasserstrahlschneidbaugruppe (201);
einen im Gehäuse (1) angeordneten Abfalltransportmechanismus, wobei der Abfalltransportmechanismus dazu ausgebildet ist, geschnittene Rohrleitungsblockstücke von der Wasserstrahlschneidbaugruppe (201) zu einem hinteren Ende des Gehäuses (1) zu transportieren;
einen Vortriebsmechanismus (4), dessen Antriebsende in der Lage ist, an dem hinteren Ende des Gehäuses (1) anzuliegen, um das Gehäuse (1) in eine von dem Vortriebsmechanismus (4) weg gerichtete Richtung zu schieben,
wobei die Wasserstrahlschneidbaugruppe (201) mindestens eine drehbare Wasserstrahldüse (2011) und mehrere feste Wasserstrahldüsen (2012) umfasst,
wobei die mehreren festen Wasserstrahldüsen (2012) in Umfangsrichtung um das Gehäuse (1) beabstandet angeordnet ist, und
wobei die drehbare Wasserstrahldüse (2011) auf einer von dem Gehäuse (1) abgewandten Seite der festen Wasserstrahldüsen (2012) angeordnet ist.

2. Rohrleitungsersatzvorrichtung nach Anspruch 1, **dadurch gekennzeichnet, dass** der Schneidmechanismus ferner eine erste Montageplatte (202) umfasst, wobei ein Ende der ersten Montageplatte (202) mit einer Innenwand des Gehäuses (1) verbunden ist und sich ein gegenüberliegendes Ende der ersten Montageplatte (202) aus dem Gehäuse (1) heraus erstreckt und mit der Wasserstrahlschneidbaugruppe (201) versehen ist.

3. Rohrleitungsersatzvorrichtung nach Anspruch 2, **dadurch gekennzeichnet, dass** der Abfalltransportmechanismus ein Aufnahmeteil (301), ein Greifteil und ein Transportteil (303) umfasst, wobei das Aufnahmeteil (301) oberhalb der ersten Montageplatte (202) angeordnet ist, und wobei zwischen einer Oberseite des Aufnahmeteils (301) und einer an der Innenwand des Gehäuses (1) fest angeordneten zweiten Montageplatte (304) ein Aufnahmespalt ausgebildet ist, und wobei an den Enden des Aufnahmeteils (301) und der zweiten Montageplatte (304) nahe der Wasserstrahlschneidbaugruppe (201) eine Abfalleinlassöffnung vorgesehen ist, und wobei das Greifteil nahe dem hinteren Ende des Gehäuses (1) angeordnet und fest mit der Innenwand des Gehäuses (1) verbunden ist, und wobei das Transportteil (303) am Boden des Gehäuses (1) angeordnet ist.

4. Rohrleitungsersatzvorrichtung nach Anspruch 3, **dadurch gekennzeichnet, dass** sie ferner einen Bodenabschabmechanismus umfasst, der ein Antriebsteil (501), eine Getriebebaugruppe (502) und eine Schneidscheibe (503) umfasst, wobei das Antriebsteil (501) am Boden des Gehäuses (1) angeordnet ist, und wobei ein Antriebsende des Antriebsteils (501) mit einem Leistungseingangsende der Getriebebaugruppe (502) verbunden ist, und wobei ein Leistungsausgangsende der Getriebebaugruppe (502) mit der Schneidscheibe (503) verbunden ist.

5. Rohrleitungsersatzvorrichtung nach Anspruch 4, **dadurch gekennzeichnet, dass** die Getriebebaugruppe (502) ein erstes Getriebezahnrad (5021) und ein zweites Getriebezahnrad (5022) umfasst, die kämmend miteinander verbunden sind, wobei das erste Getriebezahnrad (5021) mit dem Antriebsende des Antriebsteils (501) verbunden ist, und wobei das zweite Getriebezahnrad (5022) auf der zweiten Montageplatte (304) aufgesetzt ist, und wobei die Schneidscheibe (503) fest mit einer Stirnfläche des zweiten Getriebezahnrads (5022) verbunden ist.

6. Rohrleitungsersatzvorrichtung nach Anspruch 4, **dadurch gekennzeichnet, dass** die Schneidscheibe (503) mit einer Abschabzahn-Baugruppe versehen ist, die mehrere erste Abschabzähne (5031) und mehrere zweite Abschabzähne (5032) umfasst, wobei die ersten Abschabzähne (5031) und die zweiten Abschabzähne (5032) in Umfangsrichtung beabstandet angeordnet sind, und wobei die zweiten Abschabzähne (5032) nahe einem Außenrand der Schneidscheibe (503) angeordnet sind.

7. Rohrleitungsersatzvorrichtung nach Anspruch 4, **dadurch gekennzeichnet, dass** sie ferner einen Schlammwasserbehandlungsmechanismus umfasst, der eine Schlammeinlassöffnung (601), eine Trennplatte (602), ein Wassereinlassrohr (603) und ein Schlammwasserauslassrohr (604) umfasst, wobei eine Stirnfläche der Schneidscheibe (503) mit mehreren Schlammeinlassöffnungen (601) versehen ist, und wobei die Trennplatte (602) auf die zweite Montageplatte (304) aufgesetzt ist und beabstandet zu der Schneidscheibe (503) angeordnet ist, und wobei die Schneidscheibe (503), die Trennplatte (602), das Gehäuse (1) und die zweite Montageplatte (304) gemeinsam eine Schlammwasseraufnahmekammer (605) begrenzen, und wobei die Trennplatte (602) mit einer Wassereinlassöffnung und einer Schlammwasserauslassöffnung versehen ist, und wobei die Wassereinlassöffnung und die Schlammwasserauslassöffnung jeweils mit dem Wassereinlassrohr (603) und dem Schlammwasserauslassrohr (604) verbunden sind.

8. Rohrleitungsersatzvorrichtung nach einem der Ansprüche 1 bis 7, **dadurch gekennzeichnet, dass** das Gehäuse (1) einen vorderen Gehäuseteil (101) und einen hinteren Gehäuseteil (102) umfasst, die in Steckverbindung miteinander verbunden sind, wobei eine dem hinteren Gehäuseteil (102) nahe Seite des vorderen Gehäuseteils (101) und eine dem vorderen Gehäuseteil (101) nahe Seite des hinteren Gehäuseteils (102) jeweils mit einer Ringplatte (103) versehen sind, und wobei zwischen den beiden Ringplatten (103) an dem vorderen Gehäuseteil (101) und dem hinteren Gehäuseteil (102) ein Einstellmechanismus zum Einstellen einer Vorwärtsbewegungsrichtung des Gehäuses (1) angeordnet ist, und wobei an einer Innenwand des vorderen Gehäuseteils (101) drei Mikroträgheitsmesseinheiten (105) angeordnet sind.

9. Verfahren zur Verwendung einer Rohrleitungsersatzvorrichtung nach einem der Ansprüche 1 bis 8, umfassend die folgenden Schritte:
Hineinschieben eines Gehäuses (1) in einen Bereich einer zu ersetzenden alten Rohrleitung (10) mittels eines Vortriebsmechanismus (4);
Einschalten fester Wasserstrahldüsen (2012), Schneiden der alten Rohrleitung (10) entlang einer axialen Richtung mittels der festen Wasserstrahldüsen (2012), und gleichzeitiges Einschalten eines Bodenabschabmechanismus, Abschaben von Boden um die alte Rohrleitung (10) herum mittels des Bodenabschabmechanismus und Ableiten von Schlammwasser mittels eines Schlammwasserbehandlungsmechanismus;
Ausschalten der festen Wasserstrahldüsen (2012) und des Bodenabschabmechanismus, nachdem das Gehäuse (1) um eine Strecke vorwärts bewegt wurde, und Einschalten einer drehbaren Wasserstrahldüse (2011), sowie ringförmiges Schneiden der alten Rohrleitung (10) mittels der drehbaren Wasserstrahldüse (2011), um Rohrleitungsblöcke zu bilden;
Transportieren der Rohrleitungsblöcke von einer Wasserstrahlschneidbaugruppe (201) zu einem hinteren Ende des Gehäuses (1) mittels eines Abfalltransportmechanismus;
Rücksetzen des Vortriebsmechanismus (4) und Einbringen einer neuen Rohrleitung (7) zwischen den Vortriebsmechanismus (4) und das Gehäuse (1);
Wiederholen der vorstehend genannten Schritte, bis alle alten Rohrleitungen (10) geschnitten und alle neuen Rohrleitungen (7) verlegt worden sind.

## Revendications

1. Un dispositif de remplacement de canalisation, comprenant : une coque (1) ;
un mécanisme de coupe, composé d'un composant de coupe par jet d'eau (201) disposé à l'avant de la coque (1) ;
un mécanisme de transport des déchets, disposé à l'intérieur de la coque (1), dans lequel le mécanisme de transport des déchets est configuré pour transporter les blocs de canalisation coupés du composant de coupe par jet d'eau (201) vers l'arrière de la coque (1) ;
un mécanisme de levage (4), dont une extrémité d'entraînement peut s'appuyer contre l'arrière de la coque (1) pour pousser la coque (1) à se déplacer dans une direction loin du mécanisme de levage (4), dans lequel le composant de coupe par jet d'eau (201) comprend au moins une buse rotative de jet d'eau (2011) et une pluralité de buses fixes de jet d'eau (2012), dans lequel la majorité des buses fixes de jet d'eau (2012) sont espacées dans une direction circonférentielle autour de la coque (1), la buse rotative de jet d'eau (2011) est disposée d'un côté des buses fixes de jet d'eau (2012) à l'écart de la coque (1).

2. Le dispositif de remplacement de canalisation selon la revendication 1, **caractérisé en ce que** le mécanisme de coupe comprend en outre une première plaque de montage (202), une extrémité de la première plaque de montage (202) est reliée à une paroi intérieure de la coque (1), une extrémité opposée de la première plaque de montage (202) s'étend hors de la coque (1) et est dotée du composant de coupe par jet d'eau (201).

3. Le dispositif de remplacement de canalisation selon la revendication 2, **caractérisé en ce que** le mécanisme de transport des déchets comprend un élément de réception (301), un élément de préhension et un élément de transport (303), l'élément récepteur (301) est disposé au-dessus de la première plaque de montage (202), et un espace de réception est formé entre une surface supérieure de l'élément de réception (301) et une deuxième plaque de montage (304) disposée fixement sur la paroi intérieure de la coque (1), et une ouverture d'entrée de déchets est prévue aux extrémités de l'élément de réception (301) et de la deuxième plaque de montage (304) près du composant de coupe par jet d'eau (201), l'élément de préhension est disposé près de l'arrière de la coque (1) et est relié fixement à la paroi intérieure de la coque (1), et l'élément de transport (303) est placé en bas de la coque (1).

4. Le dispositif de remplacement de canalisation selon la revendication 3, **caractérisé en ce qu'**il comprend en outre un mécanisme de raclage du sol, qui comprend un élément d'entraînement (501), un composant de transmission (502) et un disque de coupe (503), dans lequel l'élément d'entraînement (501) est disposé au bas de la coque (1), une extrémité d'entraînement de l'élément d'entraînement (501) est reliée à une extrémité d'entrée de puissance du composant de transmission (502), et une extrémité de sortie de puissance du composant de transmission (502) est connectée au disque de coupe (503).

5. Le dispositif de remplacement de canalisation selon la revendication 4, **caractérisé en ce que** le composant de transmission (502) comprend un premier engrenage de transmission (5021) et un deuxième engrenage de transmission (5022) reliés entre eux de manière engrenée, dans lequel le premier engrenage de transmission (5021) est relié à l'extrémité de transmission de l'élément de transmission (501), le deuxième engrenage de transmission (5022) est manchonné sur la deuxième plaque de fixation (304), et le disque de coupe (503) est relié fixement à une surface d'extrémité du deuxième engrenage de transmission (5022).

6. Le dispositif de remplacement de canalisation selon la revendication 4, **caractérisé en ce que** le disque de coupe (503) est doté d'un composant de dent de racloir, comprenant une pluralité de premières dents de racloir (5031) et une pluralité de deuxièmes dents de racloir (5032) espacées dans une direction circonférentielle, et **en ce que** les deuxièmes dents de racloir (5032) sont disposées près d'un bord extérieur du disque de coupe (503).

7. Le dispositif de remplacement de canalisation selon la revendication 4, **caractérisé en ce qu'**un mécanisme de traitement de l'eau boueuse, qui comprend une ouverture d'entrée de boue (601), une plaque de séparation (602), un tuyau d'entrée d'eau (603) et un tuyau de rejet d'eau boueuse (604), dans lequel une surface d'extrémité du disque de coupe (503) est dotée d'une pluralité d'ouvertures d'entrée de boue (601), et la plaque de séparation (602) est manchonnée sur la deuxième plaque de montage (304), et la plaque de séparation (602) est disposée pour être espacée du disque de coupe (503), dans lequel le disque de coupe (503), la plaque de séparation (602), la coque (1) et la deuxième plaque de montage (304) entourent ensemble une chambre d'accueil pour l'eau boueuse (605), et la plaque de séparation (602) est dotée d'une ouverture d'entrée d'eau et d'une ouverture de sortie d'eau boueuse, dans lequel l'ouverture d'entrée d'eau et celle de sortie de l'eau boueuse sont respectivement reliées à la canalisation d'entrée d'eau (603) et à la canalisation de décharge d'eau boueuse (604).

8. Le dispositif de remplacement de canalisation selon l'une quelconque des revendications 1 à 7, **caractérisé en ce que** la coque (1) comprend une partie de coque avant (101) et une partie de coque arrière (102) reliées entre elles de manière à se boucher, un côté de la partie de coque avant (101) près de la partie arrière (102) et un côté de la partie arrière de la coque arrière (102) près de la partie avant (101) sont tous deux dotés d'une plaque annulaire (103), dans lequel un mécanisme d'ajustement pour ajuster la direction d'avancement de la coque (1) est disposé entre les deux plaques annulaires (103) sur la partie avant de la coque (101) et la partie arrière (102), et trois unités de mesure micro-inertielles (105) sont disposées sur une paroi intérieure de la partie avant de la coque (101)

9. Procédé pour utiliser un dispositif de remplacement de canalisation selon l'une quelconque des revendications 1 à 8, comprenant les étapes suivantes :
pousser une coque (1) dans une zone d'une ancienne canalisation (10) qui doit être remplacée en utilisant un mécanisme de levage (4) ;
activer les buses fixes de jet d'eau (2012), couper l'ancienne canalisation (10) dans une direction axiale en utilisant les buses fixes de jet d'eau (2012), puis activer simultanément un mécanisme de raclage du sol, racler le sol autour de l'ancienne canalisation (10) avec le mécanisme de grattage du sol, et rejeter l'eau boueuse avec un mécanisme de traitement de l'eau boueuse ;
désactiver les buses fixes de jet d'eau (2012) et le mécanisme de grattage du sol après que la coque (1) a avancé sur une certaine distance, et activer une buse rotative de jet d'eau (2011), et couper circonférentiellement l'ancienne canalisation (10) en utilisant la buse rotative de jet d'eau (2011) pour former des blocs de canalisation ;
transporter les blocs de canalisation depuis un composant de coupe par jet d'eau (201) jusqu'à l'arrière de la coque (1) à l'aide d'un mécanisme de transport des déchets ;
réinitialiser le mécanisme de levage (4) et positionner une nouvelle canalisation (7) entre le mécanisme de levage (4) et la coque (1) ;
répéter les étapes mentionnées ci-dessus jusqu'à ce que toutes les anciennes canalisations (10) aient été coupées et que toutes les nouvelles canalisations (7) soient posées.
